(19) Europäisches Patentamt
European Patent Office
Office européen des brevets

(11) Veröffentlichungsnummer: **0 211 395**
**B1**

(12) **EUROPÄISCHE PATENTSCHRIFT**

(45) Veröffentlichungstag der Patentschrift: **28.12.88**

(51) Int. Cl.[4]: **C 08 F 8/42**, C 08 F 8/30, C 08 C 19/44

(21) Anmeldenummer: **86110539.3**

(22) Anmeldetag: **30.07.86**

(54) **Polymerisate mit Aminogruppen, deren Herstellung und Verwendung.**

(30) Priorität: **03.08.85 DE 3527909**

(43) Veröffentlichungstag der Anmeldung: **25.02.87 Patentblatt 87/9**

(45) Bekanntmachung des Hinweises auf die Patenterteilung: **28.12.88 Patentblatt 88/52**

(84) Benannte Vertragsstaaten: **BE DE FR GB IT NL**

(56) Entgegenhaltungen:
**EP-A- 0 083 575**
**BE-A- 679 103**
**GB-A- 2 138 005**
**US-A- 3 251 812**
**US-A- 3 801 520**

(73) Patentinhaber: **BASF Aktiengesellschaft, Carl-Bosch-Strasse 38, D-6700 Ludwigshafen (DE)**

(72) Erfinder: **Bronstert, Klaus, Dr., Gartenstrasse 26, D-6719 Carlsberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft mit Aminogruppen funktionell modifizierte Homo-, Co- und/oder Blockcopolymerisate aus Vinylaromaten und/oder Dienen, deren Herstellung aus lebenden anionisch polymerisierten oder aus mit einem Alkalimetall metallisierten Homo, Co- und/oder Blockcopolymerisaten aus Vinylaromaten und/oder Dienen und deren Verwendung zur Herstellung analoger Polymerisate durch Umsetzen mit Wasser.

Bei derartigen Polymerisaten handelt es sich um hochmolekulare Verbindungen mit Molekulargewichten $\overline{M}_w$ zwischen 500 und 500.000, die funktionelle Gruppen und/oder Endgruppen an den Polymerisatmolekülen statistisch verteilt und/oder an den Kettenenden enthalten.

Funktionell modifizierte Polymerisate aus Vinylaromaten und/oder Dienen und deren Herstellung aus den entsprechenden lebenden, anionisch polymerisierten oder aus den mit Alkalimetall metallierten Polymerisaten sind bereits seit längerer Zeit bekannt. So können gemäss der deutschen Offenlegungsschrift 2 003 128 sekundäre Aminogruppen enthaltende Polymerisate dadurch erhalten werden, dass man hochmolekulare, alkalimetallorganische Verbindungen mit N-Alkyllactamen umsetzt. Ein bekanntes Verfahren zur Herstellung polymerer Verbindungen mit einer beliebigen Anzahl funktioneller Gruppen besteht darin, dass man polymere, polyfunktionelle alkalimetallorganische Verbindungen mit reaktionsfähigen niedermolekularen Verbindungen wie Kohlendioxid, Kohlenstoffdisulfid, halogensubstituierten Aminen, Alkalenoxiden, halogenierten aliphatischen Kohlenwasserstoffen umsetzt (vgl. US-Patent 3 951 931). Verfahren zur Metallierung ungesättigter Polymerisate und Umsetzen des erhaltenen metallierten Polymerisats mit reaktionsfähigen chemischen Verbindungen sind auch in den US-Patenten 3 781 260 und 3 976 628 beschrieben. Aus der Druckschrift FR-A-2 437 417 ist ein Verfahren zur Metallierung von bestimmten Ethylenterpolymerisaten und anschliessende Reaktion mit einem aliphatischen Lactam bekannt, wobei funktionell modifizierte Copolymerisate entstehen. Auch in den britischen Patenten 1 173 508 und 2 138 005 werden funktionell modifizierte Polymerisate, insbesondere Dienpolymerisate, beschrieben, welche durch Umsetzen der entsprechenden Alkalimetall-Dienpolymerisate mit aliphatischen tertiären Aminen oder Komplexen aus tertiären Aminen mit Schwefeltrioxid entstehen. Schliesslich sind aus dem US-Patent 4 015 051 Polymere mit terminalen Bistrialkylsilylaminogruppen bekannt, die aus den entsprechenden metallierten Polymeren und Siliziumaminoverbindungen erhalten werden und die durch Umsetzen mit Wasser in die entsprechenden aminsubstituierten Polymerisate überführt werden können. Die Synthese von Polymeren mit primären Aminoendgruppen durch Reaktionen von anionisch lebenden Polymeren mit geschützten Aminierungsreagenzien wie Trimethylsilylbromethylamin ist von A. Hirao et al. in der Zeitschrift Makromol. Chem., Rapid Commun. 3 (1962), Seiten 59 bis 63 beschrieben.

Nachteilig bei den bekannten Verfahren zur Einführung von Aminogruppen in Polymerisate ist, dass diese häufig mit mässiger Ausbeute verlaufen, so dass die Reaktionsprodukte hohe Anteile an inerten und infolge Nebenreaktion entstehenden Polymeren mit hohem Molekulargewicht enthalten. Auch erhält man die Amin modifizierten Polymeren nicht in einem Schritt. Aus zunächst entstehenden Zwischenprodukten müssen in aufwendigen Umsetzungen und Reinigungen die Polymeren mit Aminoendgruppen in Freiheit gesetzt werden.

Aufgabe der Erfindung war es daher Polymere aus Vinylaromaten und/oder Dienen in einer eindeutigen und mit hohem Umsatz verlaufenden Reaktion mit mindestens einer aminischen Gruppe oder Endgruppe zu schaffen. Eine weitere Aufgabe bestand darin, mit Aminogruppen funktionell modifizierte Polymere aus Vinylaromaten und/oder Dienen zu schaffen, die nicht oder nur wenig durch inerte Nebenprodukte oder durch die reaktionsfähigen niedermolekularen Verbindungen verunreinigt sind. Es bestand ferner die Aufgabe Polymerisate mit Aminogruppen auf einfachem Wege zu erhalten.

Diese Aufgaben wurden durch Polymerisate nach Ansprüchen 1 bis 5 und 7 bis 8, durch ein Verfahren zur Herstellung der Polymerisate gemäss Anspruch 6 sowie durch die Verwendung der Polymerisate nach Anspruch 1 zur Herstellung von Polymerisaten gemäss Ansprüchen 7 und 8 gelöst.

Unter mit Aminogruppen funktionell modifizierten Polymerisaten werden Polymerisate verstanden, welche die funktionellen Gruppen (I), (II) und (V) bis (VIII) enthalten, und zwar sowohl statistisch in der Kette als auch an den Kettenenden eines Makromoleküls. Die Polymeren sind bevorzugt mit 1 bis 10 funktionellen Gruppen pro Makromolekül ausgerüstet, ganz in Abhängigkeit von der Zahl der eingesetzten lebenden anionischen Kettenenden bzw. metallierten Gruppen.

Unter Homo-, Co- und Blockcopolymerisaten aus Vinylaromaten und/oder Dienen sind die bekannten Polymerisate dieser Art zu verstehen, die anionisch z.B. mit Hilfe von alkalimetallorganischen Initiatoren aus den entsprechenden Monomeren erhalten werden können. Derartige Verfahren sind so bekannt, dass sie hier nicht weiter erörtert werden müssen (vgl. z.B. GB-Patent 1 444 680 oder Journal of Applied Polymer Science, 22, [1978], Seiten 2007 bis 2913.)

Als Vinylaromaten kommen insbesondere Styrol, die verschiedenen Alkylstyrole oder Vinylnaphthalin, als Diene Butadien, Isopren, 2,3-Dimethylbutadien, Piperylen, Phenylbutadien oder andere anionisch polymerisierbare konjugierte $C_4$- bis $C_{12}$-Diene in Betracht. Ausser den jeweiligen Homopolymerisaten kommen auch die Copolymerisate und die bekannten Blockcopolymerisate von Vinylaromaten und Dienen in Frage, wobei je nach Wahl des Initiators und Lösungsmittels Blockcopolymerisate oder Copolymerisate mit statistischer Verteilung der Monomeren erhalten werden können.

Die Polymeren weisen im allgemeinen Durchschnittsmolekulargewichte (Gewichtsmittel $\overline{M}_w$) zwischen 500 und 500.000 auf, ermittelt durch Gelpermeationschromatographie (GPC) und Vergleich mit standardisierten, zur Eichung geeigneten Polymeren (vgl. G. Glöckner, «Polymercharakterisierung durch Flüssigkeitchromatographie», Verlag A. Hüthig, Heidelberg, 1982. Gemessen wird üblicherweise in 0,25 gew.%iger Tetrahydrofuranlösung bei 23°C und einer Durchflussgeschwindigkeit von 1,2 ml/min).

Die neuen Polymerisate sollen erfindungsgemäss die funktionellen Gruppen der Formeln (I) oder (II) enthalten:

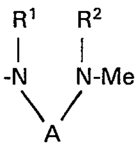
oder
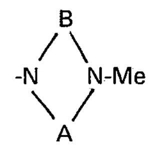

(I) (II)

worin N = Stickstoff, $R^1$ und $R^2$ = ein Alkyl- oder Arylrest, A = eine eingliedrige, gegebenenfalls substituierte Kohlenstoffbrücke, Me = ein Alkalimetall und B = eine 2- bis 12gliedrige Brücke, von der mindestens die den Stickstoffatomen sich am nächsten befindlichen Glieder aus

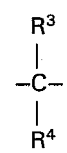

Radikalen bestehen, wobei $R^3$ und $R^4$ gleich oder verschieden sein können und Wasserstoff, Alkyl-, Cycloalkyl- oder Arylreste bedeuten und die entfernteren Glieder ausser -C($R^3$,$R^4$)-Radikalen auch Ether- oder N-Alkyl- bzw. Aryliminogruppen sein können. Als Alkalimetall kommen Li, Na, K, Rb oder Cs, insbesondere Li in Betracht.

Bevorzugt enthalten die neuen Polymerisate im Mittel 1 bis 10 der funktionelle Gruppen (I) oder (II) im Makromolekül. Das bedeutet, dass, bezogen auf die Summe aller Makromoleküle, im statistischen Durchschnitt pro Makromolekül 1 bis 10 funktionelle Gruppen vorliegen sollen.

Bevorzugt sind auch Polymerisate, bei denen die Reste $R^1$ und $R^2$ $C_1$- bis $C_4$-Alkylreste, insbesondere Butylreste, sind und die Kohlenstoffbrücke A die Methylengruppe $-CH_2-$ oder Dimethylmethylengruppen $-C(CH_3)_2-$ ist. Bevorzugt sind auch Polymerisate, in denen die Brücke B aus drei oder vier gegebenenfalls substituierten Methylengruppen zusammengesetzt ist, und insbesondere aus $-CH_2CH_2CH_2-$ oder $-CH(CH_3)CH_2CH(CH_3)-$ besteht. Bevorzugt sind auch Polymerisate, bei denen B aus zwei bis vier Kohlenstoffgliedern besteht, von denen mindestens eines eine Methylengruppe ist und die beiden anderen Bestandteile eines oder mehrerer alicyclischer oder aromatischer Ringsysteme sind. Hierzu geeignet ist beispielsweise für B die Gruppierung:

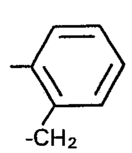
oder
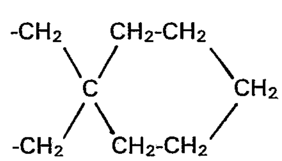

Die erfindungsgemässen Polymerisate mit den funktionellen Gruppen (I) oder (II) werden entweder aus den lebenden anionisch polymerisierten oder aus mit Alkalimetall metallisierten Homo-, Co- und/oder Blockpolymerisaten aus Vinylaromaten und/oder Dienen nach bekannten Verfahren hergestellt (vgl. die eingangs zitierte Literatur sowie J. M. Malan et al. Chem. Rev. 69 [1969] (5). Seiten 693 bis 755). Hierzu werden die Monomeren bei tiefen Temperaturen in Gegenwart von Alkalimetallen oder deren Alkyl- oder Arylderivaten, insbesondere in Gegenwart der Alkylderivate des Lithiums wie sec.-Butyllithium in einem inerten Lösungsmittel wie aliphatischen oder aromatischen Kohlenwasserstoffen, insbesondere Hexan, Cyclohexan, Benzol oder Toluol bzw. in Gegenwart von Tetrahydrofuran anionisch polymerisiert. Bei diesen Verfahren erhält man Polymerisate, welche an den Endgruppen Metalle gebunden enthalten. Man kann aber auch Homo-, Co- und/oder Blockcopolymerisat aus Vinylaromaten und/oder Dienen herstellen und nachträglich mit Alkalimetallen oder deren Derivaten metallieren. Derartig metallierte Polymerisate enthalten die metallorganischen Gruppierungen statistisch längs der Kette verteilt.

Erfindungsgemäss werden die obigen metallorganischen Polymeren mit Hydrazinderivaten der allgemeinen Formeln (III) und (IV):

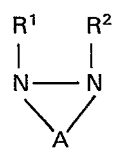
oder
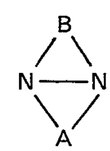

(III) (IV)

in Gegenwart eines Lösungsmittels umgesetzt, wobei $R^1$, $R^2$, A und B die eingangs angegebenen Bedeutungen haben. Als Lösungsmittel bevorzugt geeignet sind aliphatische oder aromatische Kohlenwasserstoffe wie Hexan, Cyclohexan, Benzol, Toluol usw. Die Umsetzung erfolgt bevorzugt in Abwesenheit von Wasser und in inerter Atmosphäre z.B. unter Reinstickstoff. Bei der Umsetzung soll das Verhältnis Äquivalente Hydrazinderivat zu Alkalimetall zweckmässigerweise zwischen 1:1 und 1,5:1 liegen. Die Umsetzung erfolgt zwischen −70 und 100°C, vorzugsweise bei Temperaturen zwischen 0 und 60°C. Bei der Umsetzung mit den metallorganischen Gruppen der Polymerisate erfolgt eine Spaltung der N-N-Bindung, wobei sich der Polymerrest an einen Stickstoff und das Metall, z.B. Lithium, an den anderen Stickstoff anlagert.

Als Verbindungen (III) oder (IV) sind solche geeignet, in denen $R^1$ und $R^2$ = ein Alkyl- oder Arylrest, A = eine eingliedrige, gegebenenfalls substituierte Kohlenstoffbrücke, und B = eine 2- bis 12gliedrige Brücke, von der mindestens die den N-Atomen benachbarten Glieder aus -($CR^3$,$R^4$)- Radikalen bestehen, wobei $R^3$ und $R^4$ gleich oder verschieden sein können und Wasserstoff, Alkyl-, Cycloalkyl- oder Arylreste sind und die entfernten Glieder ausser -($CR^3$,$R^4$)-Radikalen auch Ether oder N-Alkyl- bzw. N-Aryliminogruppen sein können.

Bevorzugte Reste $R^1$ und $R^2$ sowie Brücken A und

B sind in den Unteransprüchen 3 bis 5 sowie eingangs in der Beschreibung offenbart. Bevorzugtes Alkalimetall ist Lithium.

Als Hydrazinderivate der allgemeinen Formeln (III) und (IV) sind z.B. die folgenden geeignet:

1,2-Dibutyldiaziridin

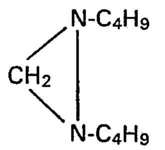

a)

1,5-Diaza-bicyclo[3,1,0]hexan

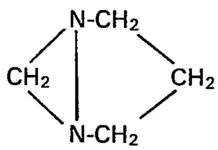

b)

6,6-Dimethyl-1,5-diazabicyclo[3,1,0]hexan

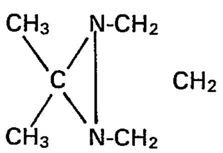

c)

1,2-Dimethyl-3-methyl-3-ethyl-diaziridin

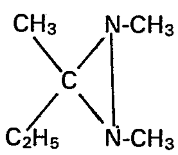

d)

1,2-Dimethyl-1,2-diazaspiro[2,3]octan

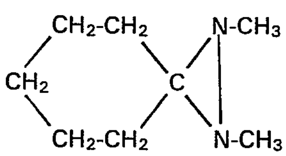

e)

1,2-Dibutyl-3-propyl-diaziridin

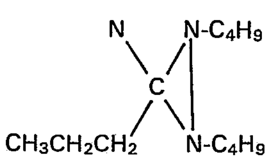

f)

3,6-Dimethyl-1,3,5-triaza-bicyclo[3,1,0]hexan

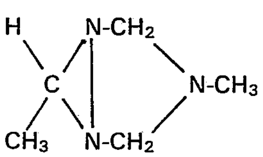

g)

6-Methyl-3-oxa-1,5-diaza-bicyclo[3,1,0]hexan

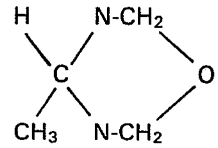

h)

6,6-Pentamethylen-1,5-diaza-bicyclo[3,1,0]hexan

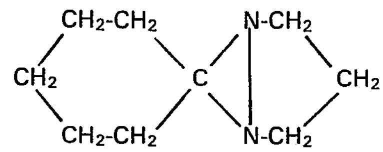

i)

Insbesondere geeignet ist die Verbindung (b).

Diese Aufzählung ist nicht vollständig und soll keine Abgrenzung sein. Weitere Individuen und die Herstellung derartiger Hydrazinderivate ist z.B. beschrieben von R. Ohme et al., Chemische Berichte 99, (1966), Seiten 2104 bis 2109 sowie von E. Schmitz und K. Schinkowsky, Chemische Berichte 97, (1964), Seite 49.

Die Umsetzung mit den Hydrazinderivaten verläuft mit grosser Geschwindigkeit und quantitativ. Es ist ein Vorteil, dass man bei ihrer Anwendung keinen oder nur wenig Überschuss benötigt, so dass die umgesetzten Polymeren kaum durch nicht umgesetzte Hydrazinderivate verunreinigt werden. Die lebenden Polymerlösungen, die eine intensive Orangerotfärbung aufweisen, wenn das Kettenende aus Styrol oder seinen Substitutionsprodukten besteht, können z.B. mit den Hydrazinderivaten auf das Verschwinden der Farbe austitriert werden.

Es ist ein Vorteil der erfindungsgemässen Polymerisate mit den funktionellen Gruppen (I) und (II) dass sie zur Herstellung analoger Polymerisate mit den funktionellen Gruppen der allgemeinen Formeln (V) und (VI) verwendet werden können:

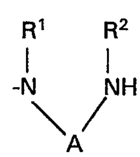

(V)

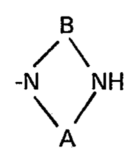

(VI)

wenn sie mit einer dem Alkalimetall äquivalenten Menge Wasser umgesetzt werden, wobei das Alkalimetall durch Wasserstoff ausgetauscht wird. Diese Umsetzung erfolgt spontan bei Zugabe des Wassers, wobei sich ausserdem Lithiumhydroxid bildet.

Ein weiterer Vorteil der erfindungsgemässen Polymerisate mit den funktionellen Gruppen (I) und (II) besteht darin, dass sie mit einem Überschuss an Wasser unter Abspaltung der Brücke A in die Polymerisate mit funktionellen Gruppen der allgemeinen Formeln (VII) und (VIII) umgewandelt werden können:

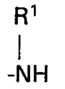

(VII)

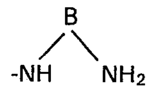

(VIII)

Auch diese Reaktion erfolgt zum Teil spontan. Man kann auch die erfindungsgemässen Polymerisate mit Wasser enthaltenden Säuren, z.B. konzentrierter Salzsäure oder 80 gew.-%iger Essigsäure bei Temperaturen zwischen 40 und 100°C behandeln, wobei die Brücke A abgespalten wird. Je nach verwendetem Hydrazinderivat entsteht ein Polymerisat mit primären oder sekundären Aminogruppen

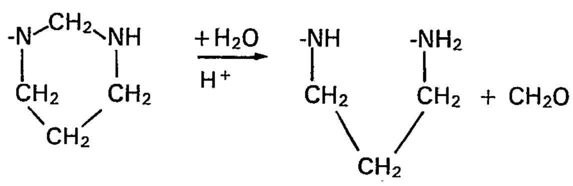


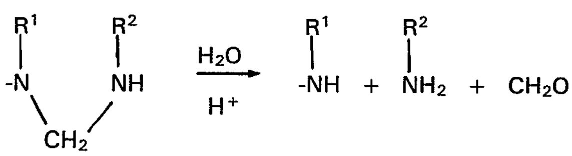


Die folgenden Beispiele dienen der Erläuterung der Erfindung.

*Herstellung der verwendeten Hydrazinderivate*

*1,5-Diaza-bicyclo[3,1,0]hexan*

In einem 2-1-Kolben werden 37,2 g (1/2 Mol) 1,3-Propylendiamin und 250 $cm^3$ 2n NaOH unter Kühlung so mit 50 $cm^3$ 30 gew.-%iger Formalinlösung gemischt, dass die Temperatur nicht über 5°C steigt. Sodann werden 274 $cm^3$ Chlorbleichlauge (160 g freies Chlor/Liter) unter sehr gutem Rühren so zugemischt, dass die Temperatur nicht über 5°C steigt. Danach wird die Lösung im Vakuum auf ca. 1/2 des ursprünglichen Volumens eingeengt ($T \leqslant 35°C$), das ausgefallene Salz abfiltriert und die Mutterlauge erschöpfend 5x mit je 200 $cm^3$ Methylenchlorid extrahiert. Der vereinigte Extrakt wird mit festem KOH getrocknet, das Methylenchlorid bei partiellem Vakuum ($T \sim 35°C$) abgezogen und das 1,5-Diaza-bicyclo[3,1,0]hexan bei 7 mbar abdestilliert.

Kp. 7 mbar = 47 bis 52°C, Ausbeute 22,5 g = 53,6% d. Theorie.

Gehalt an (in Gew.-%)

| | C | H | H |
|---|---|---|---|
| gef. | 56,1% | 9,7 % | 33,5 % |
| Theorie | 57,4% | 9,52% | 33,339 für $C_4H_8N_2$ |

*1,2-Dibutyldiaziridin*

Es wurde die Vorschrift in Chemische Berichte, 99 (1966). Seiten 2105 bis 2109 verwendet.

*6,6-Dimethyl-1,5-diaza-bicyclo[3,1,0]hexan*

37,2 g (1/2 mol) 1,3-Propylendiamin und 250 $cm^3$ 2n NaOH wurden bei 5°C mit 29 g Aceton gemischt und unter Kühlung bei 5°C 274 $cm^3$ Chlorbleichlauge (160 g aktives Chlor/Liter) zugetropft. Die Lösung wird 3x mit je 200 $cm^3$ Methylenchlorid extrahiert, der Extrakt mit festem KOH getrocknet, das Lösungsmittel so abgetrieben, dass die Temperatur im Sumpf 40°C nicht überschreitet und das Zielprodukt bei 0,3 mbar abdestilliert.

Kp 0,3 mbar = 40°C, Ausbeute 38,5 g = 69% d. Theorie.

Gehalt an (in Gew.-%)

| | C | H | N |
|---|---|---|---|
| Theorie | 64,3% | 10,7% | 25 % für $C_6H_{12}N_2$ |
| gef. | 64,1% | 10,9% | 24,9% |

*6,6-Pentamethylen-1,5-diaza-bicyclo[3,1,0]hexan*

Herstellung wie Vorschrift für 6,6-Dimethyl-1,5-diaza-bicyclo[3,1,0]hexan, jedoch werden an Stelle des Acetons 49 g Cyclohexanon (1/2 Mol) verwendet.

Kp 0,8 mbar = 87-89°C, Ausbeute 34,9 g = 45% d. Theorie.

Gew.-%

| | C | H | N |
|---|---|---|---|
| gef. | 70,5% | 10,7% | 18,6% |
| Theorie | 71,1% | 10,5% | 18,4% für $C_9H_{18}N_2$ |

*Beispiel 1*

In einem unter Reinstickstoff mit einer Lösung von sec.-Butyllithium in Cyclohexan gespülten 2-Liter-Dreihalskolben, der mit Rührer und Thermometer versehen und einer Gummimembrane verschlossen ist, werden 1000 $cm^3$ Cyclohexan und 104 g (1 Mol) gereinigtes Styrol gegeben.

Bei 50°C wird mit einer Injektionsspritze unter gutem Rühren so lange eine 1,4 molare Lösung von sec.-Butyllithium in Cyclohexan zu der Styrollösung gegeben, bis eine bleibende schwache Orangefärbung entsteht. Unmittelbar darauf werden weitere 21 mMol sec.-Butyllithium zugegeben. Die jetzt intensiv orange gefärbte Lösung erwärmt sich. Nach einer Stunde bei 70°C ist die Polymerisation beendet. Die Lösung wird mit einer 50 gew.-%igen Lösung von 1,5-Diaza-bicyclo-[3,1,0]hexan in Toluol mittels einer Injektionsspritze durch die Gummimembranen titriert. Nach Zugabe von 3,7 $cm^3$ ist die orange Farbe verschwunden. Das Polymer wird unter intensivem Rühren durch Eingiessen der Lösung in 5 l Ethanol gefällt. Nach Abfiltrieren und Trocknen werden an dem schneeweissen pulvrigen Polystyrol die folgenden analytischen Daten festgestellt:

$\overline{M}_w$ 5000 ermittelt durch GPC, die mit einem eng verteilten Standardpolystyrol geeicht wurde.

$\overline{M}_w/\overline{M}_n$ = 1,02 $\overline{M}_n$ = Zahlenmittel des Molekulargewichts, ermittelt nach GPC. $\overline{M}_w/\overline{M}_n$ ist ein Mass für die Breite der Molekulargewichtsverteilung.

Basenstickstoff bestimmt dsurch potentiometrische Titration mit Perchlorsäure in einer Mischung

von Chlorbenzol/Eisessig: 0,58 Gew.-% Gesamtstickstoff bestimmt nach Kjeldahl: 0,6 Gew.-%.

10 g des so hergestellten Polystyrols werden in 1000 $cm^3$ Toluol gelöst und mit 100 $cm^3$ 90 gew.-%igen Eisessig 2 Stunden bei 90° gehalten. Durch Hydrolyse wird die Methylenbrücke abgespalten. Die potentiometrische Titration ergibt einen Basenstickstoffgehalt von 0,5 Gew.-%.

*Beispiel 2*

In gleicher Weise wie in Beispiel 1 wird ein Polystyrol hergestellt, jedoch erfolgte der Abbruch mit einem 1,2-Dibutyldiaziridin. Das Polymer zeigt die folgenden Daten:

$\overline{M}_w$: 5300 (GPC-Methode)
$\overline{M}_w$-$\overline{M}_n$ = 1,03

Basenstickstoff: 0,57 Gew.-%
Gesamtstickstoff: 0,6 Gew.-%.

Nach Hxdrolyse mit Eisessig/$H_2O$ in Toluol ist der Gesamtstickstoff auf 0,35 Gew.-% abgesunken, der Basenstickstoff wurde zu 0,25 Gew.-% bestimmt.

*Beispiel 3*

In einem unter Stickstoff durch Spülen mit Butyllithiumlösung gereinigten, mit Rührer, Thermometer, Tropftrichter und Gummikappe versehenen Kolben wird unter inerten Bedingungen 1000 $cm^3$ Toluol und 1 Mol (104 g) Styrol eingefüllt. Dazu wurden bei 20°C aus dem Tropftrichter schnell und unter intensiven Rühren 28 $cm^3$ einer frischen Lösung von 23,0 g aktivem Natrium in 1000 $cm^3$ Tetrahydrofuran und 500 g α-Methylstyrol gegeben, die nach bekannten Verfahren hergestellt wurde. Die Reaktion setzt sofort ein. Der Inhalt des Kolbens erwärmt sich in einer Minute auf 57°C. Die fast schwarz gefärbte Lösung wird nun mit einer 50 gew.-%igen Lösung von 1,5-Diaza-bicyclo-[3,1,0]hexan in Toluol mittels einer Injektionsspritze durch die Gummimembran auf Farblosigkeit titriert. Es werden 4,7 $cm^3$ 1,5-Diaza-bicyclo-[3,1,0]hexanlösung entsprechend 28 mMol benötigt. Das Polymer zeigt die folgenden analytischen Daten.

$\overline{M}_w$ aus GPC: 7600
$\overline{M}_w$ $\overline{M}_n$ = 1,2

Gesamtstickstoff nach Kjeldahl: 0,8 Gew.-%
Basenstickstoff durch potentiometrische Titration: 0,7 Gew.-%.

Aus den Analysendaten ergibt sich, dass ein an beiden Enden mit insgesamt 4 Aminogruppen versehenes Polystyrol entstanden ist.

*Beispiel 4*

Zur Herstellung eines 2-Blockcopolymeren aus 17 Gew.-% Styrol und 83 Gew.-% Butadien mit Diaminoendgruppen wird ein mit Rührer, Thermometer, Rückflusskühler, Gummimembran und Heizmantel versehener 6-l-Reaktor mit Cyclohexan, das 2 $cm^3$ sec.-Butyllithium enthält, unter Reinstickstoff zur Reinigung ausgekocht. Nach Ablassen dieser Lösung wird der Reaktor mit 3000 $cm^3$ Cyclohexan und 0,9 Mol = 93,6 g Styrol beschickt. Mit Hilfe einer Injektionsspritze wird bei 40°C so lange eine Lösung von sec.-Butyllithium zudosiert, bis eine leichte Orangefarbe anzeigt, dass alle Verunreinigungen verbraucht sind. Darauf werden 12 mMol sec.-Butyllithium zugegeben und eine Stunde bei 65°C das Styrol auspolymerisiert. Sodann lässt man 10,2 Mol Butadien, das durch Abdestillieren von Butyllithium gereinigt wurde, nach und nach bei dieser Temperatur zulaufen. Eine Stunde nach Beendigung des Zulaufs setzt man mit einer Spritze 2 $cm^3$ Styrol zu. Die während der Polymerisation des Butadiens fast farblose Lösung färbt sich nach einer weiteren Stunde bei 65°C orange. Jetzt wird durch Zugabe von 1,5-Diaza-bicyclo-[3,1,0]hexan (50 gew.-%ige Lösung in Toluol) aus einer kalibrierten Injektionsspritze auf farblos titriert. Es werden 1,85 $cm^3$ (= 11 mMol bzw. 0,924 g) der Lösung benötigt.

Nach GPC wird ein $\overline{M}_w$ von 55.000 ermittelt. Der Stickstoffgehalt nach Kjeldahl beträgt 0,047 Gew.-% (Theorie 0,051).

*Beispiel 5*

In der Apparatur gemäss Beispiel 4 wird in 3000 $cm^3$ Cyclohexan 540 g Isopren® (gereinigt über Cahydrid) mit ca. 8 mMol sec.-Butyllithium polymerisiert. Nach Beendigung der Polymerisation werden 2 $cm^3$ Styrol zugegeben. Nach einer weiteren Stunde wird mit 1,68 $cm^3$ einer 50 gew.-%igen 1,5-Diazabicyclo-[3,1,0]hexanlösung auf farblos titriert.

Molgewicht des Polyisoprens $\overline{M}_w$ aus GPC: 60.000
Stickstoffgehalt nach Kjeldahl: 0,05 Gew.-% (Theorie 0,047%).

**Patentansprüche**

1. Mit Aminogruppen funktionell modifizierte Homo-, Co- und/oder Blockcopolymeriste aus Vinylaromaten und/oder Dienen, dadurch gekennzeichnet, dass sie funktionelle Gruppen der Formeln (I) oder (II) enthalten:

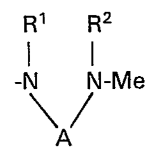 oder 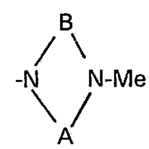

(I) (II)

worin N = Stickstoff, $R^1$ und $R^2$ = ein Alkyl- oder Arylrest, A = eine eingliedrige, gegebenenfalls substituierte Kohlenstoffbrücke, Me = ein Alkalimetall und B = eine 2- bis 12gliedrige Brücke, von der mindestens die den Stickstoffatomen nächsten Glieder aus -C($R^3$,$R^4$)-Radikalen bestehen, wobei $R^3$ und $R^4$ gleich oder verschieden sein können und Wasserstoff, Alkyl-, Cycloalkyl- oder Arylreste sind, und die entfernteren Glieder ausser -C($R^3$,$R^4$)-Radikalen auch Ether oder N-Alkyl- bzw. N-Aryliminogruppen sein können.

2. Polymerisate nach Anspruch 1, dadurch gekennzeichnet, dass sie pro Makromolekül im Mittel 1 bis 10 der funktionellen Gruppen (I) oder (II) enthalten.

3. Polymerisate nach Anspruch 1, dadurch ge-

kennzeichnet, dass die Reste $R^1$ und $R^2$ $C_1$- bis $C_4$-Alkylreste sind und A eine Methylen- oder Dimethylmethylenbrücke ist.

4. Polymerisate nach Anspruch 1, dadurch gekennzeichnet, dass B eine aus drei oder vier, gegebenenfalls alkylsubstituierten Methylengruppen zusammengesetzte Brücke ist.

5. Polymerisate nach Anspruch 1, dadurch gekennzeichnet, dass B aus 2 bis 4 Kohlenstoffgliedern besteht, von denen mindestens eines eine Methylengruppe ist und die beiden anderen Bestandteile eines oder mehrerer alicyclischer oder aromatischer Ringsysteme sind.

6. Verfahren zur Herstellung der Polymerisate nach Anspruch 1 aus lebenden anionisch polymerisierten oder aus mit Alkalimetall metallierten Homo-, Co- und/oder Blockcopolymerisaten aus Vinylaromaten und/oder Dienen, dadurch gekennzeichnet, dass sie mit Hydrazinderivaten der allgemeinen Formeln (III) und (IV):

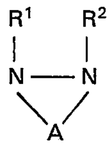 oder 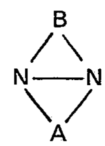

(III) (IV)

in Gegenwart eines Lösungsmittels umgesetzt werden, wobei $R^1$, $R^2$, A und B die oben angegebenen Bedeutungen haben.

7. Verwendung der Polymerisate nach Anspruch 1 zur Herstellung analoger Polymerisate mit den funktionellen Gruppen der allgemeinen Formeln (V) oder (VI) durch Umsetzen mit äquivalenten Mengen Wasser

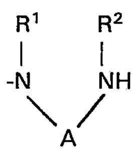 oder 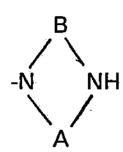

(V) (VI)

8. Verwendung der Polymerisate nach Anspruch 1 zur Herstellung analoger Polymerisate mit den funktionellen Gruppen der allgemeinen Formeln (VII) oder (VIII) durch Umsetzen mit einem Überschuss Wasser

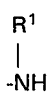 oder 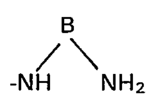

(VII) (VIII)

## Claims

1. A homopolymer, copolymer or block copolymer obtained from a vinylaromatic and or a diene, and modified with functional amino groups, which contains functional groups of the formula (I) or (II)

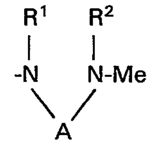 or 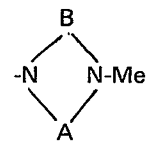

(I) (II)

where N is nitrogen, $R^1$ and $R^2$ are each alkyl or aryl, A is an unsubstituted or substituted one-membered carbon bridge, Me is an alkali metal and B is a 2-membered to 12-membered bridge in which at least the members adjacent to the nitrogen atoms consist of -C($R^3$,$R^4$) radicals, where $R^3$ and $R^4$ can be identical or different and are each hydrogen, alkyl, cycloalkyl or alkyl, and the more remote members can be not only -C($R^3$,$R^4$) radicals but also ether or N-alkyl- or N-arylimino groups.

2. A polymer as claimed in claim 1, which contains on average from 1 to 10 of the functional groups (I) or (II) per macromolecule.

3. A polymer as claimed in claim 1, wherein $R^1$ and $R^2$ are each $C_1$-$C_4$-alkyl and A is a methylene or dimethylmethylene bridge.

4. A polymer as claimed in claim 1, wherein B is a bridge composed of three or four unsubstituted or alkylsubstituted methylene groups.

5. A polymer as claimed in claim 1, wherein B consists of 2, 3 or 4 carbon members, one or more of which is methylene and the other two form part of one or more alicyclic or aromatic ring systems.

6. A process for the preparation of a polymer as claimed in claim 1 from a living anionically polymerized homopolymer, copolymer or block copolymer of a vinylaromatic and or a diene, or from a polymer of this type which has been metallized with an alkali metal, wherein the said polymer is reacted with a hydrazine derivative of the formula (III) or (IV)

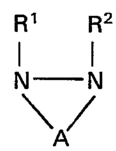 or 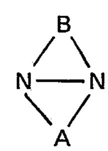

(III) (IV)

where $R^1$, $R^2$, A and B have the above meanings, in the presence of a solvent.

7. Use of a polymer as claimed in claim 1 for the preparation of a similar polymer possessing the functional groups of the formula (V) or (VI)

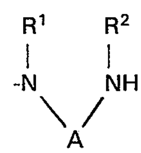 or 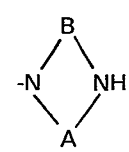

(V) (VI)

by reaction with an equivalent amount of water.

8. Use of a polymer as claimed in claim 1 for the preparation of a similar polymer possessing the functional groups of the formula (VII) or (VIII)

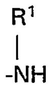

or

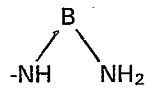

(VII) (VIII)

by reaction with an excess of water.

## Revendications

1. Homopolymères, copolymères et copolymères séquencés de composés vinylaromatiques et/ou de diènes, modifiés fonctionnellement par des groupements amino, caractérisés en ce qu'ils contiennent des groupements fonctionnels de formules (I) ou (II)

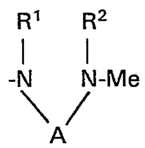

ou

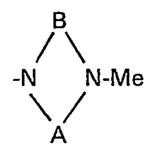

(I) (II)

dans lesquelles N est un atome d'azote, $R^1$ et $R^2$ sont un reste alkyle ou aryle, A est un pont carboné à un terme éventuellement substitué, Me est un métal alcalin, et B est un pont à 2-12 termes parmi lesquels les termes les plus proches des atomes d'azote sont constitués de radicaux $-C(R^3,R^4)$, où $R^3$ et $R^4$ peuvent être identiques ou différents et sont des atomes d'hydrogène ou des radicaux cycloalkyle ou aryle, et les termes éloignés peuvent être, outre des radicaux $-C(R^3,R^4)$, des groupement éther ou N-alkyl- ou N-arylamino.

2. Polymères selon la revendication 1, caractérisés en ce qu'ils contiennent en moyenne de 1 à 10 groupements fonctionnels (I) ou (II) par macromolécule.

3. Polymère selon la revendication 1, caractérisés en ce que les restes $R^1$ et $R^2$ sont des restes alkyle en $C_1$-$C_4$ et A est un pont méthylène ou diméthylméthylène.

4. Polymères selon la revendication 1, caractérisés en ce que B est un pont composé de trois ou quatre groupements méthylène éventuellement substitués par des radicaux alkyle.

5. Polymères selon la revendication 1, caractérisés en ce que B est formé de 2 à 4 termes carbonés parmi lesquels au moins un est un groupement méthylène et les deux autres constituants sont un ou plusieurs cycles alicycliques ou aromatiques.

6. Procédé de préparation de polymères selon la revendication 1 à partir d'homopolymères, de copolymères ou de copolymères séquencés de composés vinylaromatiques et/ou de diènes, polymérisé par voie anionique existants, ou métallisés avec des métaux alcalins, caractérisé en ce qu'on les fait réagir, en présence d'un solvant, avec des dérivés d'hydrazine de formule générale (III) et (IV)

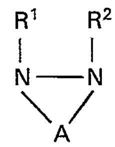

ou

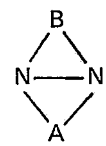

(III) (IV)

dans lesquelles $R^1$, $R^2$, A et B sont tels que définis précédemment.

7. Utilisation des polymères selon la revendication 1, pour la préparation de polymères analogues ayant des groupements fonctionnels de formules générales (V) ou (VI)

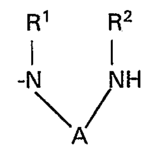

ou

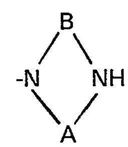

(V) (VI)

par réaction avec une quantité équivalente d'eau.

8. Utilisation des polymères selon la revendication 1, pour la préparation de polymères analogues ayant des groupements fonctionnels de formules générales (VII) ou (VIII)

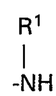

ou

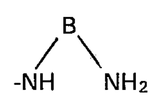

(VII) (VIII)

par réaction avec un excès d'eau.